# EUROPEAN PATENT APPLICATION

(11) **EP 3 376 554 A1**
(43) Date of publication of application: **19.09.2018**
(21) Application number: 17161564.4
(22) Date of filing: 17.03.2017
(51) Int. Cl.: H01M 2/04, H01M 2/30, H01M 10/42, H01M 2/02, H01M 2/26, H01M 10/0587, H01M 10/0525

(54) **FAST DISCHARGE AND/OR SHUT DOWN UNIT, BATTERY CELL, CELL MODULE OR BATTERY, AND APPARATUS**

(71) Applicant: Lithium Energy and Power GmbH & Co. KG, 70469 Stuttgart (DE)
(72) Inventor: Hoerlein, Rainer Heinrich, 71679 Asperg (DE); Liebenow, Cornelius, 70372 Stuttgart (DE)
(74) Representative: Bee, Joachim

(57) **Abstract**

The present invention concerns a fast discharge and/or shut down unit (30) for an assigned underlying battery cell (10), the battery cell (10) comprising first and second battery cell terminals (11, 12) each having an external side part (14) for externally connecting the battery cell (10), wherein the fast discharge and/or shut down unit (30) comprises first and second discharge contacts (33, 34) and is configured in order (i) to controllably short-circuit said battery cell (10) by controllably electrically connecting said first and second battery cell terminals (11, 12) via said first and second discharge contacts (33, 34) and (ii) to be contacted or contactable with its first and second discharge contacts (33, 34) to said first and second battery cell terminals (11, 12) or with respective first and second terminal lines (15, 16) thereof with a physical and/or spatial separation (40) from said external side parts (14) of said first and second cell terminals (11, 12).

## Description

### State of the Art

The present invention concerns a fast discharge and/or shut down unit for a battery cell, battery cell as such, cell module or battery, and apparatus and in particular vehicle.

Recent growth of electronic industry has increased the demand for high performance, compact and portable electronic devices. Such electronic devices require batteries with high energy density and capacity. Particularly suitable for this purpose are nickel-rich and lithium-rich batteries. However, such batteries bear problems in case of battery cell failure or battery cell abuse. As a consequence, the battery may show undesired hazardous behavior, such as degassing, development of fire and explosion.

US 2014/0266064 A1 describes a battery cell, a monitoring and actuation unit for monitoring the battery cell and a method for monitoring a battery cell. EP 2777979 A1 concerns a battery module and a method for monitoring a battery module.

In order to avoid a hazardous behavior as described above, battery cells have been equipped with fast discharge and/or shut down units, for instance together with certain separator configurations within the electrochemical part. The fast discharge and/or shutdown units may be configured in order to discharge the electrochemical part via a resistor to be connected between the battery cell terminals in order to reduce the energy amount stored in the electrochemical part and in particular to simultaneously increase the temperature of the separator within the electrochemical part in order to cause an at least partial impermeability of the separator with respect to a certain kind of ions, thereby achieving an irreversible passivation of the underlying battery cell.

In view of the safety aspects, initiation of a fast discharge and/or shut down unit is majorly based on the process of short-circuiting battery cell terminals for starting the fast discharge and/or shutdown process.

As the battery cell has to be connected to other devices, for instance to an apparatus to be energized, there exist different connecting conditions in view of the different purposes to be fulfilled, namely on the one hand the purpose of observing the battery cell's state and the conditional short-circuiting of its battery cell terminals and on the other hand the electrical contact for energizing an underlying apparatus or the like. It is difficult to fulfill all these requirements with usual contact setups.

### Disclosure of the invention

The fast discharge and/or shut down unit according to the present invention as defined in independent claim 1, however, has the advantage of increasing the flexibility when realizing the different contacts to an underlying battery cell. This is achieved by the present invention as defined according to independent claim 1, by providing a fast discharge and/or shut down unit for an assigned underlying battery cell, the battery cell comprising first and second battery cell terminals each having an external side part for externally connecting and/or contacting the battery cell, wherein the fast discharge and/or shut down unit comprises first and second discharge contacts and/or lines and wherein the fast discharge and/or shut down unit is configured
(i) in order to controllably short-circuit said battery cell by controllably electrically connecting said first and second battery cell terminals via said first and second discharge contacts and/or lines and
(ii) in order to be contacted or contactable with its first and second discharge contacts and/or lines to said first and second battery cell terminals or with respective first and second terminal lines thereof with a physical and/or spatial separation from said external side parts of said first and second cell terminals.

It is - in other words - a key aspect of the present invention to provide a physical and/or spatial separation between contact portions of the fast discharge and/or shut down unit to the assigned and underlying battery cell and contact portions required for contacting to the battery cell and an external entity, for instance a device for an apparatus, for the energizing process. Thereby, the different requirements for the different contacts can more reliably and simultaneously be fulfilled wherein an interference between them is reduced or avoided.

Roughly speaking, the contacts for the fast discharge and/or shut down unit shall preferably be physically and/or spatially separated from the so-called cell tabs.

The dependent claims contain advantageous embodiments of the present invention.

According to a preferred embodiment of the present invention the fast discharge and/or shut down unit which is configured in order to have or to establish connection nodes of said first and second discharge contacts and/or lines to connection side parts of said first and second battery cell terminals and/or to said first and second terminal lines and with said physical and/or spatial separation formed in separation to said external side parts of said first and second battery cell terminals.

In addition or alternatively, the fast discharge and/or shut down unit according to the present invention may be configured in order to have or to establish said first and second discharge contacts and/or lines partly or entirely or at least said first and second connection nodes either inside or outside a housing of the underlying battery cell and/or on the same side or on a different side and in particular on an opposite side of the battery cell and/or regarding an underlying housing and/or an underlying electrochemical part and the external part side of the first and second battery cell terminal.

Following a particular advantageous embodiment of the present invention, the fast discharge and/or shut down unit may comprise a resistor and may be configured in order to controllably electrically connect said first and second cell terminals in parallel to an battery cell's electrochemical part and in order to discharge and/or to shut down the battery cell under first predetermined conditions by connecting the battery cell terminals via said resistor.

The fast discharge and/or shut down unit according to the present invention may be configured in order to discharge the underlying battery cell by means of a first current flowing through the battery cell and through the fast discharge and/or shut down unit and by connecting the first and second battery cell terminals via the resistor.

The resistor may in particular be selected in order to cause the first current during a current flow through the battery cell and through the fast discharge and/or shut down unit to heat an electrochemical part of the underlying battery cell such that a separator of the underlying battery cell reaches a predefined temperature for shut down.

The resistor may be selected in order to avoid a thermal runaway of the underlying battery cell during the heating of the electrochemical part by the first current flowing through electrochemical part and through the fast discharge and/or shut down unit.

The present invention further concerns a battery cell as such.

The battery cell according to the present invention may either be equipped with a fast discharge and/or shut down unit according to the present invention or with a connection to a fast discharge and/or shut down unit according to the present invention.

In particular the battery cell according to the present invention may comprise first and second battery cell terminals for an external contact of the battery cell, in particular via external side parts thereof, an electrochemical part (20), preferably formed as or comprising a configuration of a jelly roll or of an electrode stack, electrically connected to the battery cell terminals, and a fast discharge and/or shut down unit according to the present invention or a connection thereto.

The fast discharge and/or shut down unit may be connected or connectable to the battery cell terminals in parallel to the electrochemical part and configured in order to discharge and/or to shut down the battery cell under first predetermined conditions by connecting the battery cell terminals via a resistor.

The fast discharge and/or shut down unit may be contacted or contactable with its first and second discharge contacts to said first and second cell terminals or with respective first and second terminal lines thereof with a physical and/or spatial separation from said external side parts of said first and second cell terminals.

The battery cell according to the present invention may preferably be configured such that its electrochemical part comprises a positive electrode, a negative electrode, an electrolyte component having a conductive salt component and a solvent component, and a separator.

The separator may be configured in order to become at least partially impermeable for ions generated inside of the electrochemical part upon reaching a or said predefined temperature.

The fast discharge unit may be configured in order to discharge the battery cell by means of a first current flowing through the battery cell and through the fast discharge unit by connecting the first and second battery cell terminals via the resistor of the fast discharge unit.

The resistor may in particular be selected in order to cause the first current during a current flow through the battery cell and through the fast discharge unit to heat the electrochemical part such that the separator reaches the predefined temperature.

The resistor of the fast discharge unit may be selected in order to avoid a thermal runaway of the battery cell during the heating of the electrochemical part by the first current flowing through the electrochemical part and through the fast discharge unit.

In the following, further general aspects of the battery cell according to the present invention are circumscribed:
The electrochemical part of the inventive battery cell preferably comprises a positive electrode, a negative electrode, an electrolyte component having a conductive salt component and a solvent component, and a separator.

The degree of security of the inventive battery cell can be further increased if the separator is configured to become at least partially impermeable for ions generated inside of the electrochemical part upon reaching a predefined temperature.

The degree of reliability of the battery cell can be further increased
(A) if the fast discharge unit is configured to discharge the battery cell by means of a first current flowing through the battery cell and the fast discharge unit by connecting the first and second battery cell terminals via the resistor of the fast discharge unit and
(B) if the resistor is in particular selected to cause the first current during a current flow through the battery cell and the fast discharge unit to heat the electrochemical part such that the separator reaches the predefined temperature.

In order to even better avoid hazardous situations for the battery cell, the resistance of the fast discharge unit may be selected in order to avoid a thermal runaway of the battery cell during the heating of the electrochemical part by the first current flowing through the electrochemical part and the fast discharge unit.

The inventive battery cell may comprise two battery cell terminals which are contactable from outside of the battery cell and an electrochemical part which is preferably constructed in the form of at least one jelly roll/electrode stack comprising a plurality of electrodes, an electrolyte comprising at least one conductive salt and at least one solvent, and at least one separator.

The at least one separator may be constituted such that it becomes at least partially impermeable for ions which can be generated inside of the electrochemical part, when the at least one separator reaches a predefined temperature.

In order to increase the safety of the inventive battery cell, the battery cell includes a fast discharge unit having at least one resistor. The fast discharge unit is connectable between the two battery cell terminals and configured to discharge the battery by means of a first current flowing through the battery and the fast discharge unit.

More particularly, a first resistance value of the at least one resistor may be selected in such a way, that the first current causes during flowing through the battery and the fast discharge unit such a heating of the electrochemical part, that the at least one separator reaches the predefined temperature.

In other words, within a few milliseconds after activation of the fast discharge the charge carriers in front of the electrodes are discharged very fast. This leads to a depletion of charge carriers in front of the electrodes and causes a first strong polarization of the electrodes. Within the next few hundred milliseconds, in a second step, the charge carriers already existing in the electrolyte will be discharged very fast in comparison to the slower deinsertion/insertion reaction of the electrodes, to the slow diffusion through the solid-electrolyte interface (SEI) and to the slow diffusion in the active material. This causes a strong separation of charge carries in front of the electrode which causes a further increasing of electrode polarization and a high voltage drop of the battery cell and a first plateau phase is reached.

The faster the discharge, the higher is the safety behavior of the battery cell, because the discharge current rapidly decreases and the warming of the battery cell is not locally fixed at a damage zone. Therefore, the total warming of the battery cell is low compared to the local warming in case of a short circuit.

According to a further aspect of the present invention a cell module is provided comprising a plurality of battery cells according to the present invention.

The present invention further suggests a battery as such comprising a plurality of cell modules and/or a plurality of battery cells each configured according to the present invention.

According to a preferred embodiment of the inventive battery, the plurality of battery cells is configured as a plurality of pairs of battery cells, wherein at least one of the members of the pairs of battery cells is formed according to the present invention. It is of particular advantage that in the pairs it is sufficient that one of the members of the pairs is provided with the inventive concept of having a separation means. This reduces the burden of establishing the respective equipment.

However, a more preferred embodiment of the present invention provides for each battery cell of the plurality of battery cells a configuration according to the present invention, namely by establishing for each battery cell in the battery an individual fast discharge unit together with a respective control unit in particular with respective control parts and/or actuating and/or signaling parts.

Furthermore, an apparatus and in particular a vehicle are proposed, comprising an operation part and an energizing part configured in order to energize the operation part. The energizing part is or comprises one or a plurality of battery cells, cell modules and/or batteries each configured according to the present invention.

### Brief description of the drawings

In the following section embodiments of the present invention are disclosed with reference to the enclosed figures.
- Figure 1: is a schematic side view of an embodiment of an apparatus according to the present invention based on a battery cell and a fast discharge and/or shut down unit according to the present invention.
- Figures 2 and 3: are schematic side views of embodiments of battery cells defining parts of the technical background of the present invention.
- Figures 4 to 11: are schematic side views elucidating preferred embodiments of the battery cell according to the present invention in connection with embodiments of the fast discharge and/or shut down according to the present invention.

### Embodiments of the present invention

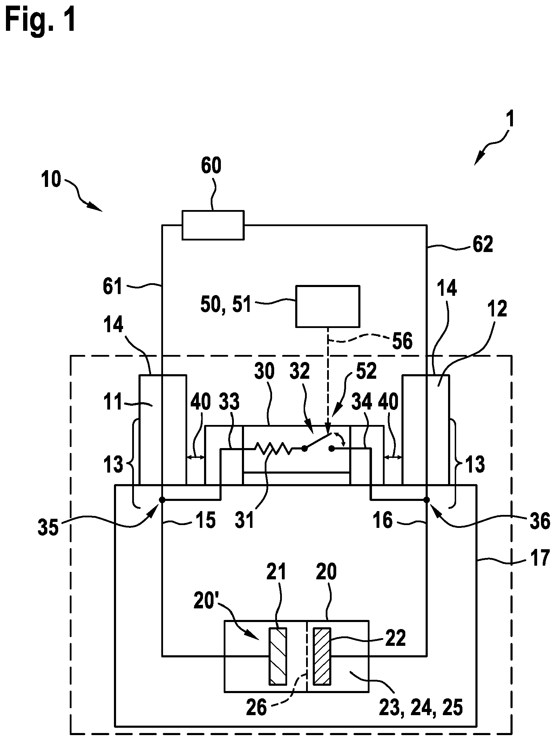

In the following, embodiments and the technical background of the present invention are described in detail by taking reference to accompanying figures 1 to 11. Identical or equivalent elements and elements which act identically or equivalently are denoted with the same reference signs. Not in each case of their occurrence a detailed description of the elements and components is repeated.

The depicted and described features and further properties of the invention's embodiments can arbitrarily be isolated and recombined without leaving the gist of the present invention.

Figure 1 is a schematic side view of an embodiment of an apparatus 1 according to the present invention based on a battery cell 10 and a fast discharge and/or shut down unit 30 according to the present invention.

The battery cell 10 shown in figure 1 comprises in a housing 17 an electrochemical part 20 which is formed by a first or positive electrode 21, a second or negative electrode 22 and an electrolyte component 23 having at least one salt component 24 and at least one solvent component 25.

The electrodes 21, 22 are immersed in the electrolyte 23 and they are separated by a separator 26 which has the property of becoming at least partially impermeable upon reaching from below a predetermined temperature threshold for one or several ion species generated in the battery cell 10.

The battery cell 20 is connected via terminal lines 15 and 16 to first and second battery cell terminals 11, 12 which are configured for establishing an external contact, e.g. for supplying electric power via supply lines 61, 62 to a load 60 in order to run a particular device providing the load 60.

The load 60 together with the supply lines 61, 62 and the battery cell 10 form a general embodiment of an apparatus 1 according to the present invention.

Each of the first and second battery terminals 11, 12 comprises a connection side part 13 for establishing a more or less internal electric connection to the battery cell 10 and its terminal lines 15, 16 on the one hand and an individual fast discharge and/or shut down unit 30 to be described below on the other hand.

In addition, the first and second battery terminals 11, 12 also comprise an external side part 14 for being contacted to respective supply lines 61, 62 connected to the load 60 representing a device to be energized by the battery cell 10.

In addition to the terminal lines 15, 16 for connecting the battery cell 10, at connection nodes 35, 36 discharge contacts or lines 33 and 34 are provided in the connection side part 13. For connecting the connection side parts 13 of the first and second battery cell terminals 11, 12, the individual fast discharge and/or shut down unit 30 which is configured in order to perform a fast discharge of the battery cell 10 under certain conditions and in order to thereby avoid hazardous situations.

As shown schematically in figure 1, this may be done by operating a discharge switch 32 or the like for closing the connection between the connection nodes 35 and 36 for discharging the battery cell 10 and its electrochemical part 20 via the serially enclosed discharge resistor 31 having an appropriate resistance value.

On the one hand, the resistance value of the resistor 31 is chosen in order to achieve a discharge of the battery cell 20 in a way avoiding a thermal runaway of the battery cell 10 and its electrochemical part 20.

In order to further support the safety aspects implemented by the fast discharge and/or shut down unit 30, a control and/or trigger unit 50 with a control part 51 is provided.

The control and/or trigger 50 is configured in order to conditionally initiate an electric conducting path between the respective battery cell terminals 11 and 12.

The operations of the individual fast discharge and/or shut down unit 30 on the one hand and of the control and/or trigger unit 50 on the other hand may be initiated by certain predetermined conditions.

The control and/or trigger unit 50 as designed according to the present invention may comprise a control part 51 and a trigger probe 52 which are connected to each other via a connecting line which is also called trigger line 56. The trigger line 56 may be referred to as an external connection.

Via the trigger line 56, the control part 51 of the control and/or trigger unit 50 is capable of conditionally initiating operating the individual fast discharge and/or shut down unit 30, namely by conditionally operating the trigger probe 52.

Via connection with the trigger line 56, the control part 51 and in particular the entire control and/or trigger unit 50 may be separated and externally be mounted with respect to the battery cell 10 and/or the fast discharge and/or shut down unit 30.

Alternatively, the control and/or trigger unit 50 together with its control part 51, the trigger line 56, and the trigger probe 52 as well as the fast discharge and/or shut down unit 30 may entirely or partly form components of the underlying battery cell 10.

The conditions for operating the fast discharge and/or shut down unit 30 may be based on the conditions and the operation state of the electrochemical part 20 of the battery cell 10.

According to the present invention the discharge contacts or lines 33, 34 in particular the connection nodes 35, 36 of the fast discharge and/or shut down unit 30 are designed in a physically and/or spatially separated manner - namely by forming a physical and spatial separation 40 - for instance as a part of or within the connection side parts 13 of the first and second battery cell terminals 11, 12 or of the terminal lines 15, 16 when compared to the external side part 14 which are designed for external connection, for instance to supply lines 61, 62 for connecting to an external load 60.

By these measures the present invention enables a separate design for the connection nodes 35, 36 and/or for the first and second discharge contacts or lines 33, 34 of the fast discharge and/or shut down unit 30 when compared to the contacts within the external side parts 14 for the external connections.

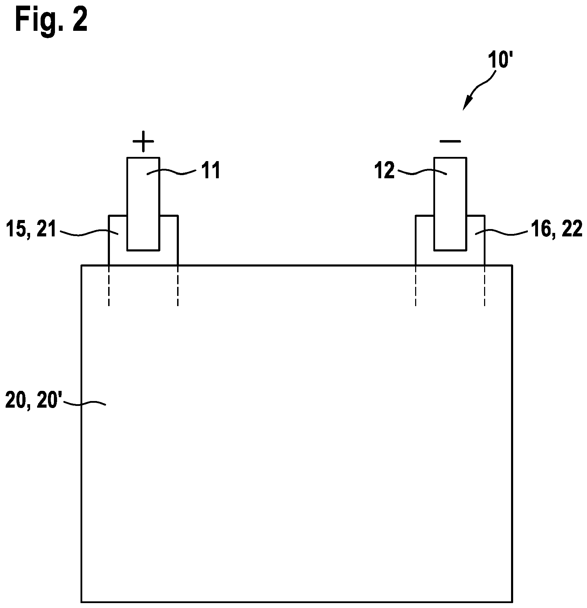

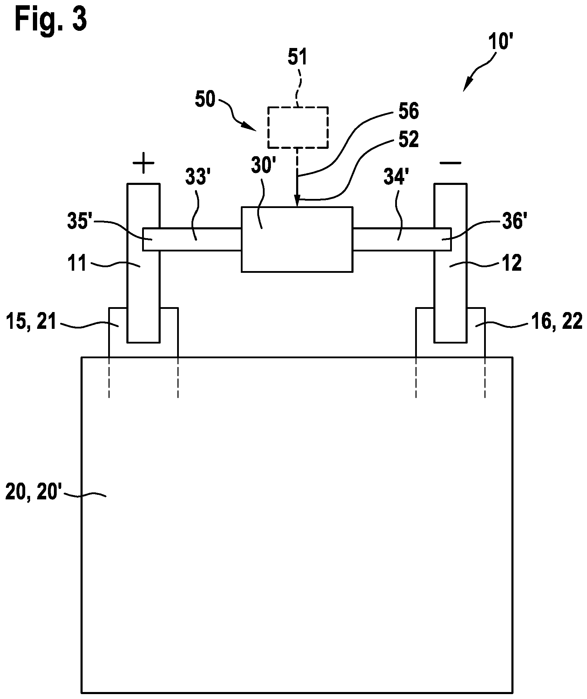

Figures 2 and 3 are schematic side views of embodiments of battery cells 10' and 10" defining parts of the technical background of the present invention.

In the embodiment shown in figure 2, no fast discharge and/or shut down unit 30 at all is provided in the conventional battery cell 10'.

The fast discharge and/or shut down unit 30' shown in the battery cell 10" according to figure 3 is - in contrast to the present invention - directly connected to the cell terminals 11 and 12 and its contacts to the terminal lines 15, 16 and in particular to the first and second electrodes 21, 22 of the electrochemical part 20 and its jelly roll 20' or electrode stack 20'. Therefore the entire cell terminals 11 and 12 have to be designed in order to enable increased densities of electrical current in a case where short-circuiting is established by the fast discharge and/or shut down unit 30' when triggered by the control and/or trigger unit 50 and its control part 51 by a trigger line 56 trigger probe 52. This is because the discharge contacts or lines 33', 34' and in particular the connection nodes 35', 36' of conventional design are directly situated on and in the vicinity of the first and second battery cell terminals 11 and 12.

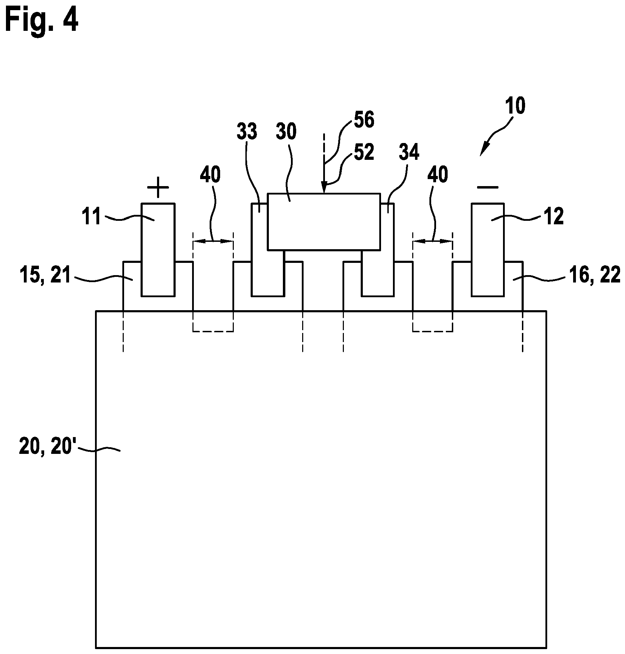

In contrast thereto, figures 4 to 11 provide schematic side views elucidating preferred embodiments of battery cells 10 according to the present invention in connection with embodiments of the fast discharge and/or shut down unit 30 according to the present invention.

These embodiments exemplify realizations of the key concept of the present invention according to which the discharge contacts or lines 33, 34 and in particular the connection nodes 35, 36 of the fast discharge and/or shut down unit 30 are provided in the area of the connection side parts 13 of the first and second battery cell terminals 11, 12 or the respective terminal lines 15, 16 of the underlying battery cell 10 with a physical and/or spatial separation 40 when compared to the external side parts 14 of the first and second battery cell terminals 11, 12 for the external connection.

These and further features, properties and advantages of the present invention will be further discussed in the following:
Addressing customer demand lithium ion or Li-ion battery cells 10 with increasingly high energy density are currently being introduced to the market.

Especially the use of Ni rich chemistry systems such as NCM622, NCM811 or NCA enable unprecedented energy densities.

With the increase in energy density the safety of such battery cells under abuse conditions (e.g. nail penetration, crush) and with respect to internal short circuits becomes more and more of an issue.

Inter alia figure 1 describes a safety concept for battery cells utilizing an external fast discharge and/or shut down unit or circuit 30 to prevent thermal runaway of the cell 10 under abuse conditions and in the case of internal short circuits.

The fast discharge and/or shut down unit or device 30 is connected to the terminals 11, 12 of the battery cell 10 and has been described in more detail already above.

While the safety concept described in connection with the fast discharge and/or shut down unit or device 30 is very efficient in protecting battery cells 10 from thermal runaway, it has some disadvantages when implemented in the proposed way with the safety switch 32 connected between the terminals 11, 12 of the battery cell 10.

Key to the efficiency of the concept is the total resistance of the external discharge path formed by Cu-foil tabs, current collector, switch 32 with bus bars, current collector, Al-foil tabs in addition to all the contact resistances between the individual elements. This total resistance needs to be as small as possible in order to allow a maximum external discharge current and thus ensure safety on battery cells 10 with large capacity.

This poses two main problems when designing a battery cell 10:
- Low resistance requires the use of thick current collectors and/or cell cases when the current flows over the case made from highly conductive materials such as Al and Cu. This makes the cell cases heavy, bulky and expensive.
- It can be desirable for safety reasons to design the current collectors such that they fuse when the current becomes too high to protect the cell. This is not possible when the collectors must support the very high current of the fast discharge.

The present invention therefore proposes a novel cell layout in which the function of fast discharge connection and terminal connection are completely physically and/or spatially separated, as shown for instance in figures 1 and 4.

This enables separate optimization of the properties of the two different current paths in order to achieve a maximum performance of the battery cell 10 which can either contain a stacked or a wound electrochemical element 20.

The fast discharge path can be realized using thick bus bars with minimum length and the minimum number of joining points yielding a reduced contact resistance and directly connected to the foils of the cell stack.

However the present invention is not limited to stacked electrode assemblies. It can be applied on wound electrodes, for instance the concept of jelly roll 20', too, while the terminal connection can be designed using cost efficient materials such as Hilumin and with minimized material thickness in order to optimize volume occupancy and minimize weight and costs.

Additional functions such as fusing can be implemented into the terminal connections.

With this approach, total discharge path resistances in the range of approximately 50 to 200 µΩ become feasible while the conventional approach typically does not allow values below 200 µΩ. This will increase the maximum capacity of a cell which can be made safe using the fast discharge functionality in order to increase by at least a factor of 2.

Figures 2 to 4 demonstrate different battery cells 10 or electrode stacks 20' in top view with protruding flags for the positive and negative electrode. A cell housing is only generally indicated in figure 1.

In figure 2, an arrangement of a battery cell 10' is demonstrated having an externally contacting of terminals 11 and 12 in a manner known and without any fast discharge and/or shut down unit.

Figure 3 describes an arrangement for a battery cell 10" with a fast discharging device 30 connected to the cell terminals 11 and 12 in the known manner from which the present invention starts.

In figure 4 - similar as in figure 1 - according to the present invention separated tabs for terminal connections 11, 12 and tabs, lines or connections 33, 34 for connecting the fast discharge and/or shut down unit or device 30 are exemplified.

Depending on the realization of the battery cell housing 17 - e.g. as a pouch or as a can type with terminals or a nutshell - the two current paths - i.e. one for the fast discharge process and another one for the connection of the cell terminals 11 and 12 - can be implemented in different ways.

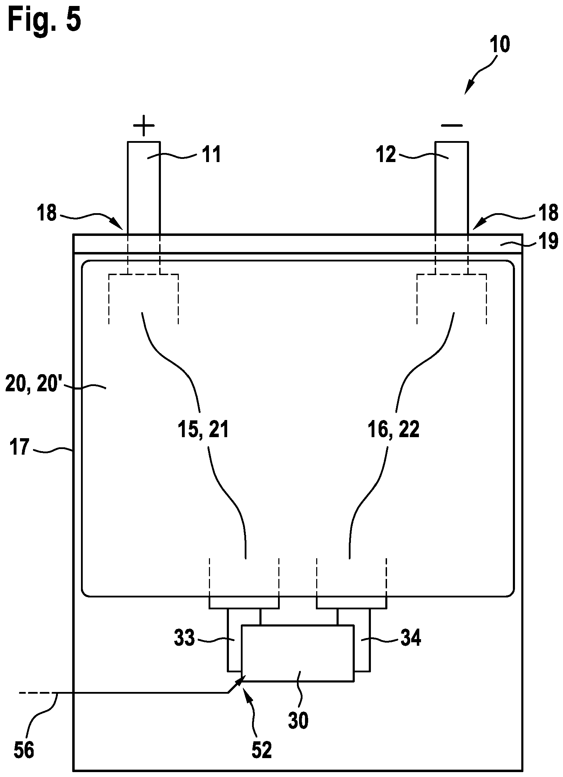

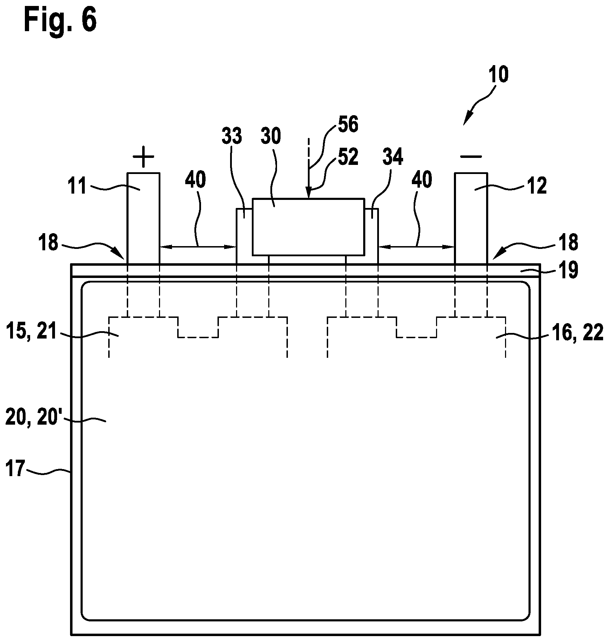

Different examples of integration concepts are shown in connection with figures 5 and 6 for a battery cell 10 of the pouch-type housing 17.

Figures 5 and 6 show examples for the realization of the invention's concept in a pouch-type cell with flexible, sealed encapsulation as a housing 17 of the electrochemical element 20 in a multilayer PE/AI foil.

The embodiment of figure 5 is provided with contacting points for terminals 11, 12 on opposite sides of the electrochemical element 20 and the fast discharge device 30 inside the pouch bag forming a kind of housing 17.

The embodiment of figure 6 is provided with contacting points for terminals 11, 12 on the same side of the electrochemical element 20 and the fast discharge device 30 outside the pouch bag forming the housing 17.

Other combinations of relative tab position and device inside/outside the pouch bag as a housing 17 are also possible but not shown.

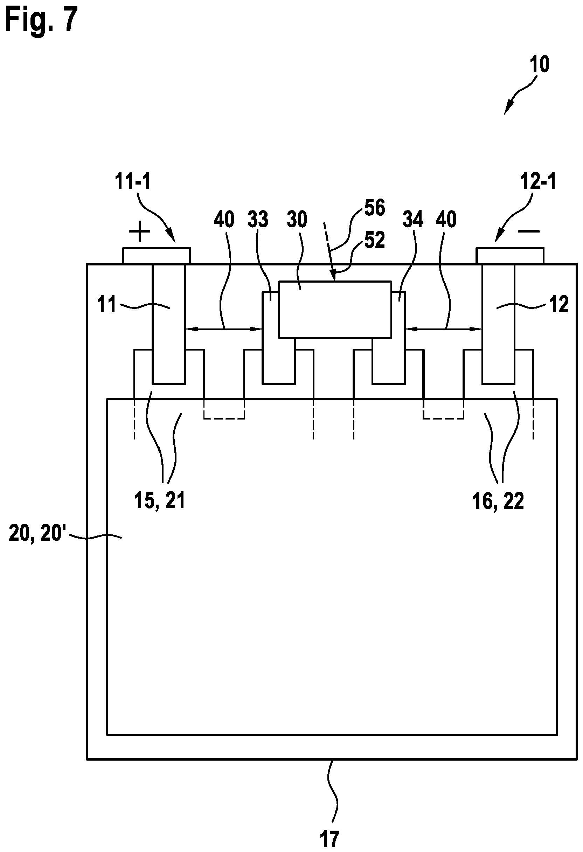

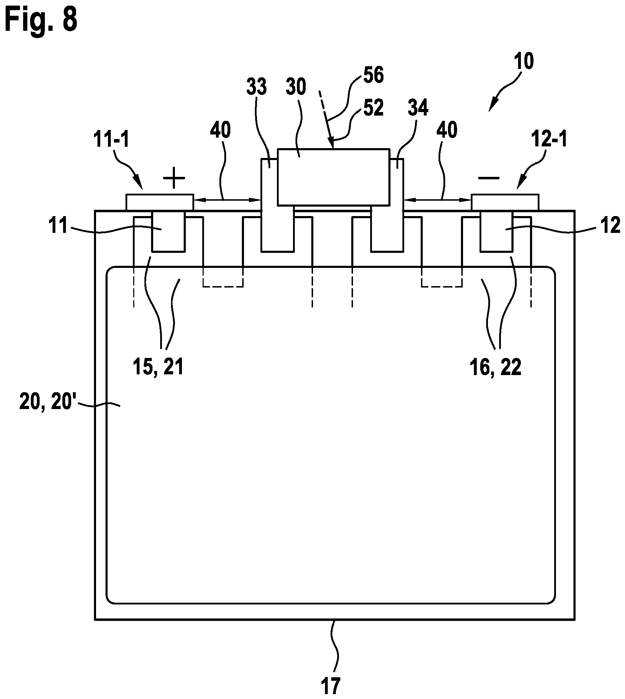

Examples for the integration into a hard case as a housing 17 for a battery cell 10 thereby forming a hard case cell are shown in figures 7 and 8.

It has to be noticed that in the examples the hard case cell is shown with two separate terminals 11, 12.

However, the present invention is not limited to this geometry.

Hard case cells - where parts or the entire housing 17 act as terminals - are also possible. In addition, battery cells 10 with housings 17 which are partially made from pouch material with hard case components shall also be embraced.

Figures 7 and 8 demonstrate design variants of the invention on a hard case cell 10.

In the embodiment of figure 7, the terminal connections 11, 12 and the fast discharge device connections or lines 33 and 34 are formed on the same side of the electrochemical element or part 20 with the fast discharge and/or shut down unit 30 or device situated inside the cell housing 17.

In the embodiment according to figure 8, the terminal 11, 12 and fast discharge device connections 33 and 34 are located on the same side of the electrochemical element 20 with the fast discharge and/or shut down unit 30 or device located outside the cell housing 17.

Other combinations of relative positions of the battery cell terminals 11, 12 or tabs and the position of the fast discharge and/or shut down unit or device 30 inside or outside the hard case as a housing 17 are also possible but not explicitly shown.

Besides different geometric realizations the concept of the present invention can be extended to include additional functionalities.

For example, the invention is not limited to the connection of one fast discharge and/or shut down unit or device 30.

In some cases, especially for very large capacity cells 10 it may be beneficial to connect more than one fast discharge circuit 30 to the battery cell 10 which can be triggered simultaneously or separately.

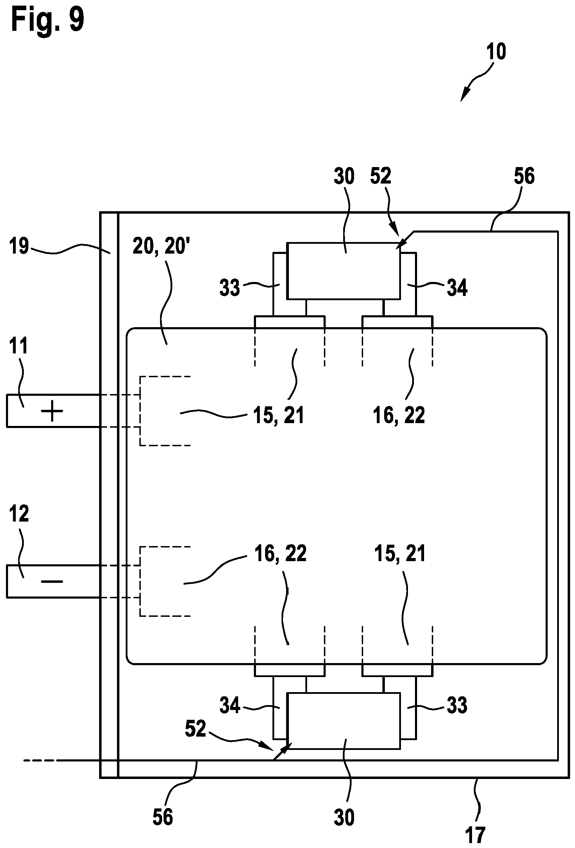

Figure 9 shows an example for this approach on a battery cell of the pouch-type.

As described above, the electrical requirements for the connection to the fast discharge and/or shut down unit or device 30 and to the battery cell terminals 11, 12 can differ.

It may especially be beneficial to include an overload protection into the battery cell terminals 11, 12 and their connections.

In contrast to a situation where the terminals 11, 12 are used to connect the fast discharge and/or shut down unit or device 30 this is feasible in the technical context described here.

In figure 9 a modified version of the invention is shown having connectors 33 and 34 for two fast discharge and/or shut down units or devices 30. In this example, a pouch-type battery cell 10 is equipped with the two fast discharge and/or shut down units or devices 30 which are connected on opposite sides of the housing 17. While this may be beneficial from a heat dissipation point of view it is not the only possible solution. The fast discharge and/or shut down units or devices 30 could also be connected on the same side. The concept can also be transferred to a hard case cell and the fast discharge and/or shut down units or devices 30 could also be located outside the housing 17 and in a manner comparable to the concepts shown in connection with figures 5 to 8.

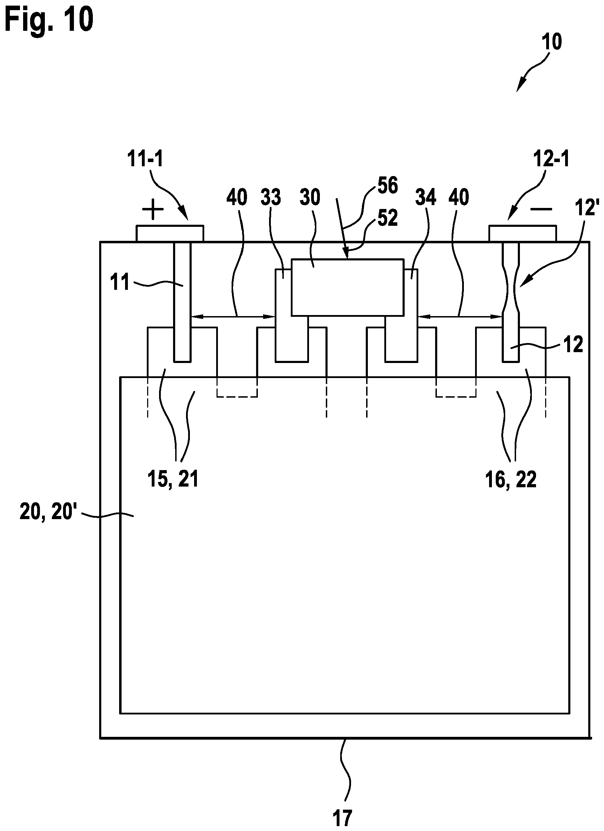

Figure 10 shows an example of a layout with an overload protection in the negative terminal 12 of a battery cell 10.

Figure 10 is a sketch of a battery cell 10 according to the invention with battery cell terminals 11, 12 designed for the moderate current requirements of the cell connectors for instance as shown in figure 1 in view of supply lines 61 and 62 to a load 60 given by an external device.

The connections 33 and 34 of the fast discharge and/or shut down unit or device 30 are designed much larger to withstand very high currents. The terminal connector 13 on the negative terminal 12 is designed as a melting fuse 12' in order to protect the battery cell 10 from an external short circuit.

Finally, with this invention it is easily possible to modify the terminal positions on the outer side of the battery cell 10 in customized cell variants, as the connections from the cell stack or electrochemical part 20 to the terminals 11, 12 can be realized by thinner and more flexible connectors while the connection 33 and 34 of the electrodes 21 and 22 to the fast discharge and/or shut down unit or device 30 remains unchanged.

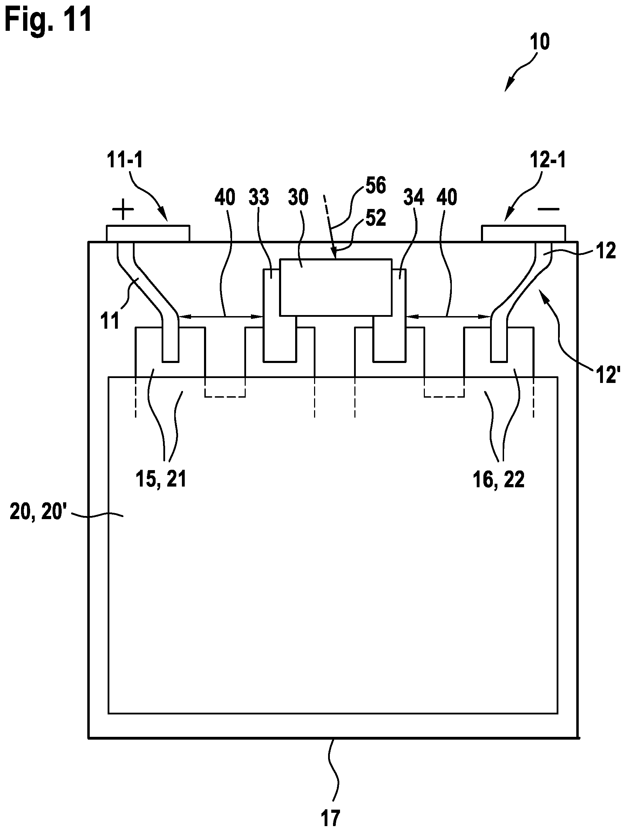

This situation is visualized in the context of figures 10 and 11.

Figures 10 and 11 therefore trade the realization of customized terminal position by using the same construction unit cell stack 20 and a fast discharge and/or shut down unit or device 30.

In figure 10 the terminals 11, 12 are located closer to each other and they are smaller.

In figure 11 the terminals 11 and 12 of the battery cell 10 are positioned at the larger distance between the terminals 11 and 12.

In both examples the cell terminal 12 for the negative electrode is again equipped with a fuse element 12'.

### Core of the invention

The core of the invention lies in the physical and/or spatial separation of the functions of connecting terminals 11, 12 and of connecting a fast discharge and/or shut down unit or device 30 in a battery cell 10.

This allows for a separate, distinct and distinguished optimization of the fast discharge path especially in terms of total resistance and thus makes the provision of a fast discharge and/or shut down unit or device 30 more efficient.

### Benefits of the present invention

The invention enables battery cells 10 with optimized fast discharge path resistances of about 50 µΩ to 150 µΩ while the connection of a fast discharge and/or shut down unit or device 30 to the battery cell terminals 11, 12 does not allow values below 200 µΩ in practice.

This decrease in resistance in turn significantly increases the capacity of Ni-rich Li-ion batteries which can be made safe even under nail penetration conditions.

In practice, a capacity increase by at least a factor of 2 will be achievable. With this increase in capacity, batteries with safe cell technology become economically much more attractive.

The invention can be applied to all high energy lithium ion battery cells 10 using an external fast discharge and/or shot down unit or device 10 in order to guarantee the safety of the battery cell 10.

## Claims

1. Fast discharge and/or shut down unit (30) for an assigned underlying battery cell (10), the battery cell (10) comprising first and second battery cell terminals (11, 12) each having an external side part (14) for externally connecting the battery cell (10),
wherein the fast discharge and/or shut down unit (30)
- comprises first and second discharge contacts (33, 34) and
- is configured in order
- to controllably short-circuit said battery cell (10) by controllably electrically connecting said first and second battery cell terminals (11, 12) via said first and second discharge contacts (33, 34) and
- to be contacted or contactable with its first and second discharge contacts (33, 34) to said first and second battery cell terminals (11, 12) or with respective first and second terminal lines (15, 16) thereof with a physical and/or spatial separation (40) from said external side parts (14) of said first and second cell terminals (11, 12).

2. Fast discharge and/or shut down unit (30) according to claim 1,
which is configured in order to have or to establish connection nodes (35, 36) of said first and second discharge contacts (33, 34) to connection side parts (13) of said first and second battery cell terminals (11, 12) and/or to said first and second terminal lines (15, 16) and with said physical and/or spatial separation (40) formed in separation to said external side parts (40) of said first and second battery cell terminals (11, 12).

3. Fast discharge and/or shut down unit (30) according to claim 2,
which is configured in order to have or to establish said first and second discharge contacts (33, 34)
- partly or entirely or at least said first and second connection nodes (35, 36) either inside or outside a housing (17) of the underlying battery cell (10) and/or
- on the same side or on a different side and in particular on an opposite side of the battery cell (10) and/or regarding an underlying housing (17) and/or an underlying electrochemical part (20) and the external part side (14) of the first and second battery cell terminals (11, 12).

4. Fast discharge and/or shut down unit (30) according to any one of the preceding claims, which
- comprises a resistor (31) and is
- configured
- in order to controllably electrically connect said first and second cell terminals (11, 12) in parallel to an battery cell's (10) electrochemical part (20) and
- in order to discharge and/or to shut down the battery cell (10) under first predetermined conditions by connecting the battery cell terminals (11, 12) via said resistor (31).

5. Fast discharge and/or shut down unit (30) according to claim 4,
- which is configured in order to discharge the underlying battery cell (10) by means of a first current flowing through the battery cell (10) and through the fast discharge and/or shut down unit (30) and by connecting the first and second battery cell terminals (11, 12) via the resistor (31),
- wherein the resistor (31) is in particular selected in order to cause the first current during a current flow through the battery cell (10) and through the fast discharge and/or shut down unit (30) to heat an electrochemical part (20) of the underlying battery cell (10) such that a separator (26) of the underlying battery cell (10) reaches a predefined temperature for shut down, and/or
- the resistor (31) is selected in order to avoid a thermal runaway of the underlying battery cell (10) during the heating of the electrochemical part (20) by the first current flowing through the electrochemical part (20) and through the fast discharge and/or shut down unit (30).

6. Battery cell (10), comprising:
- first and second battery cell terminals (11, 12) for an external contact of the battery cell (10), in particular via external side parts (40) thereof,
- an electrochemical part (20), preferably formed as or comprising a configuration of a jelly roll (20') or of an electrode stack (20'), electrically connected to the battery cell terminals (11, 12),
- a fast discharge and/or shut down unit (30) according to any one of claims 1 to 5 or a connection thereto,
wherein the fast discharge and/or shut down unit (30)
- is connected or connectable to the battery cell terminals (11, 12) in parallel to the electrochemical part (20) and configured in order to discharge and/or to shut down the battery cell (10) under first predetermined conditions by connecting the battery cell terminals (11, 12) via a resistor (31) and
- contacted or contactable with its first and second discharge contacts (33, 34) to said first and second cell terminals (11, 12) or with respective first and second terminal lines (15, 16) thereof with a physical and/or spatial separation (40) from said external side parts (14) of said first and second cell terminals (11, 12).

7. Battery cell (10) according to claim 6, wherein
- the electrochemical part (20) comprises a positive electrode (21), a negative electrode (22), an electrolyte component (23) having a conductive salt component (24) and a solvent component (25), and a separator (26),
- wherein the separator (26) is configured in order to become at least partially impermeable for ions generated inside of the electrochemical part (20) upon reaching a second predefined temperature or said predefined temperature,
- the fast discharge unit (30) is configured in order to discharge the battery cell (10) by means of a first current flowing through the battery cell (10) and through the fast discharge unit (30) by connecting the first and second battery cell terminals (11, 12) via the resistor (31) of the fast discharge unit (30),
- the resistor (31) is in particular selected in order to cause the first current during a current flow through the battery cell (10) and through the fast discharge unit (30) to heat the electrochemical part (20) such that the separator (26) reaches the predefined temperature, and/or
- wherein the resistor (31) of the fast discharge unit (30) is selected in order to avoid a thermal runaway of the battery cell (10) during the heating of the electrochemical part by the first current flowing through electrochemical part (20) and through the fast discharge unit (30).

8. Cell module, comprising a plurality of battery cells (10) according to claim 6 or 7.

9. Battery, comprising a plurality of cell modules according to claim 8 and/or a plurality of battery cells (10) according to claim 6 or 7.

10. Apparatus (1) and/or vehicle, comprising:
- an operation part (60) and
- an energizing part for energizing the operation part,
wherein the energizing part is or comprises one or a plurality of battery cells (10) according to claim 6 or 7, cell modules according to claim 8 and/or batteries according to claim 9.
